# EUROPEAN PATENT APPLICATION

(11) **EP 4 629 602 A1**
(43) Date of publication of application: **08.10.2025**
(21) Application number: 23902172.8
(22) Date of filing: 29.08.2023
(51) Int. Cl.: H04L 67/62

(54) **VEHICLE DIAGNOSTIC ROUTING METHOD AND APPARATUS, AND SYSTEM, VEHICLE AND STORAGE MEDIUM**

(30) Priority: 14.12.2022 CN 202211611417
(71) Applicant: Guangzhou Automobile Group Co., Ltd., Guangzhou, Guangdong 510030 (CN)
(72) Inventor: ZHU, Pengbo, Guangzhou, Guangdong 511434 (CN); XIE, Yanyan, Guangzhou, Guangdong 511434 (CN); WEN, Xiaofeng, Guangzhou, Guangdong 511434 (CN); ZOU, Jinlu, Guangzhou, Guangdong 511434 (CN); GAO, Deshen, Guangzhou, Guangdong 511434 (CN); GAO, Bin, Guangzhou, Guangdong 511434 (CN)
(74) Representative: Zaboliene, Reda
(86) International application number: PCT/CN2023/115500
(87) International publication number: WO 2024/124964

(57) **Abstract**

Embodiments of this application provide a vehicle diagnostic routing method, apparatus (200), and system (300), a vehicle (400), and a storage medium (500), and relate to the field of diagnostic communication technologies. In the method, when receiving a diagnostic request message sent by a client (110), a node between the client (110) and a diagnosed node (130) forwards the diagnostic request message; and if no diagnostic response from a next-level node is received within the first timing duration, sends an upper-level node a message for requesting the client (110) to wait, so as to notify the client (110) to wait until a preset condition is met. Therefore, a diagnostic routing and response timeout can be avoided, a diagnostic communication failure can be avoided, and a diagnostic communication success rate can be increased.

## Description

### CROSS-REFERENCE TO RELATED APPLICATIONS

This application claims priority to Chinese Patent Application No. 202211611417.2, filed with the China National Intellectual Property Administration on December 14, 2022 and entitled "VEHICLE DIAGNOSTIC ROUTING METHOD, APPARATUS, AND SYSTEM, VEHICLE, AND STORAGE MEDIUM", which is incorporated herein by reference in its entirety.

### TECHNICAL FIELD

Embodiments of this application relate to the field of diagnostic communication technologies, and in particular, to a vehicle diagnostic routing method, apparatus, and system, a vehicle, and a storage medium.

### BACKGROUND

With the development of vehicle electronic technologies, an in-vehicle network is becoming increasingly complex, a vehicle diagnostic communication link is becoming longer, and the quantity of intermediate nodes between a client and a diagnosed node increases accordingly. As a result, a diagnostic routing time is long, a diagnostic response timeout is easily caused, and a diagnostic communication failure is caused.

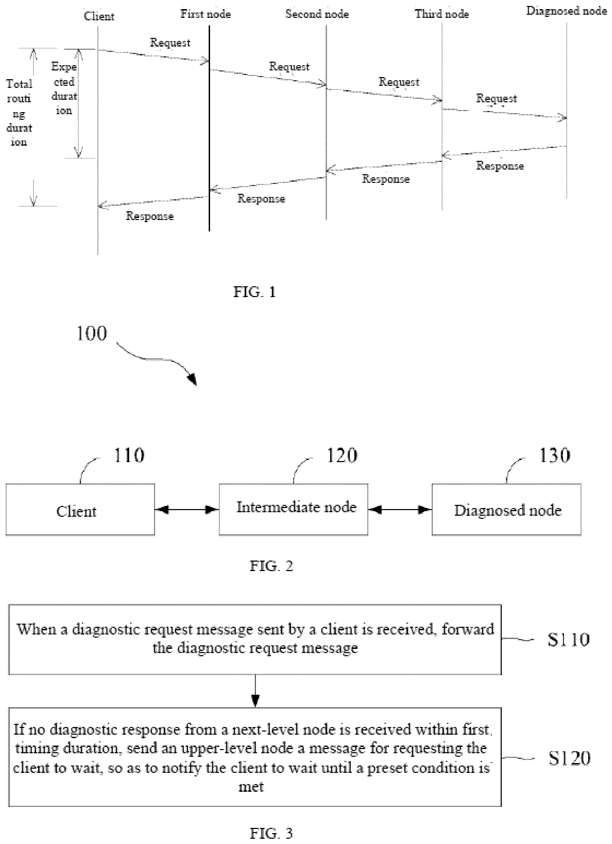

FIG. 1 is used as an example (an actual in-vehicle diagnostic link may be longer). A diagnostic request message sent by a client sequentially passes through a first node, a second node, and a third node, and is finally routed to the diagnosed node. After receiving the diagnostic request message, the diagnosed node sends a diagnostic response message, and the diagnostic response message is finally routed to the client after sequentially passing through the third node, the second node, and the first node. As shown in FIG. 1, total routing duration of the diagnostic request message and the diagnostic response message exceeds expected duration, which causes the client to fail to receive, within the expected duration, the diagnostic response message corresponding to the diagnostic request message, resulting in a response timeout of the client, thereby causing a diagnostic communication failure. The expected duration refers to duration in which the client expects to receive a response after successfully sending a request, and is referred to as P2client in the art.

### SUMMARY

Embodiments of this application provide a vehicle diagnostic routing method, apparatus, and system, a vehicle, and a storage medium, so as to alleviate the foregoing problem.

According to a first aspect, an embodiment of this application provides a vehicle diagnostic routing method. The method includes: when a diagnostic request message sent by a client is received, forwarding the diagnostic request message; and if no diagnostic response from a next-level node is received within the first timing duration, sending an upper-level node a message for requesting the client to wait, so as to notify the client to wait until a preset condition is met.

According to a second aspect, an embodiment of this application provides a vehicle diagnostic routing method. The method includes: after a client sends a diagnostic request message, routing and forwarding, by an intermediate node, the diagnostic request message according to the method in any one of claims 1 to 5, where the intermediate node is a node between the client and a diagnosed node; and when receiving the diagnostic request message, determining, by the diagnostic node, that routing of the diagnostic request message ends.

According to a third aspect, an embodiment of this application provides a vehicle diagnostic routing apparatus. The apparatus includes: a first message forwarding module, configured to: when a diagnostic request message sent by a client is received, forward the diagnostic request message; and a second message forwarding module, configured to: if no diagnostic response from a next-level node is received within the first timing duration, send an upper-level node a message for requesting the client to wait, so as to notify the client to wait until a preset condition is met.

According to a fourth aspect, an embodiment of this application provides a vehicle diagnostic routing system. The system includes: a client, configured to send a diagnostic request message; an intermediate node, configured to route and forward the diagnostic request message according to the method provided in the first aspect of the embodiments of this application, where the intermediate node is a node between the client and a diagnosed node; and the diagnosed node, configured to: when receiving the diagnostic request message, determine that routing of the diagnostic request message ends.

According to a fifth aspect, an embodiment of this application provides a vehicle. The vehicle includes a memory, one or more processors, and one or more application programs. The one or more application programs are stored in the memory, and are configured to: when invoked by the one or more processors, cause the one or more processors to perform the method provided in the embodiments of this application.

According to a sixth aspect, an embodiment of this application provides a computer-readable storage medium. The computer-readable storage medium stores program code, and the program code is configured to: when invoked by a processor, cause the processor to perform the method provided in the embodiments of this application.

Embodiments of this application provide a vehicle diagnostic routing method, apparatus, and system, a vehicle, and a storage medium. In the method, in a vehicle diagnostic routing process, a node between a client and a diagnosed node may automatically send a message for requesting the client to wait when no diagnostic response from a next-level node is received within the first timing duration, so as to notify the client to wait, thereby avoiding a diagnostic routing and response timeout, avoiding a diagnostic communication failure, and increasing a diagnostic communication success rate.

### BRIEF DESCRIPTION OF DRAWINGS

To describe the technical solutions in the embodiments of this application more clearly, the following briefly describes the accompanying drawings required for describing the embodiments. Clearly, the accompanying drawings in the following description are merely some embodiments of this application. A person skilled in the art may further obtain other accompanying drawings according to these accompanying drawings without creative efforts.
FIG. 1 is a schematic flowchart of a related vehicle diagnostic routing method according to an example embodiment of this application;
FIG. 2 is a schematic structural diagram of a vehicle diagnostic routing system according to an embodiment of this application;
FIG. 3 is a schematic flowchart of a vehicle diagnostic routing method according to an embodiment of this application;
FIG. 4 is a schematic flowchart of a vehicle diagnostic routing method according to an embodiment of this application;
FIG. 5 is a schematic flowchart of a vehicle diagnostic routing method according to an embodiment of this application;
FIG. 6 is a schematic diagram of a diagnostic service identifier according to an example embodiment of this application;
FIG. 7 is a schematic flowchart of a vehicle diagnostic routing method according to an example embodiment of this application;
FIG. 8 is a schematic structural diagram of a vehicle diagnostic routing apparatus according to an embodiment of this application;
FIG. 9 is a schematic structural diagram of a vehicle diagnostic routing system according to an embodiment of this application;
FIG. 10 is a schematic structural diagram of a vehicle according to an embodiment of this application; and
FIG. 11 is a schematic structural diagram of a computer-readable storage medium according to an embodiment of this application.

### DESCRIPTION OF EMBODIMENTS

To enable a person skilled in the art to better understand the solutions of this application, the following clearly and completely describes the technical solutions in the embodiments of this application with reference to the accompanying drawings in the embodiments of this application.

FIG. 2 is a schematic structural diagram of a vehicle diagnostic routing system according to an embodiment of this application. The vehicle diagnostic routing system 100 may be applied to a vehicle, and is used to implement a vehicle diagnostic routing method provided in the embodiment of this application. The vehicle diagnostic routing system 100 may include a client 110, an intermediate node 120, and a diagnosed node 130. The client 110 may initiate a diagnostic request message. The diagnostic request message is routed and forwarded by the intermediate node 120 and finally routed to the diagnosed node 130. The diagnosed node 130 performs, according to the diagnostic request message, a diagnostic operation requested by the client 110, and sends a diagnostic response message after completing the diagnostic operation. The diagnostic response message is routed and forwarded by the intermediate node 120 and finally routed to the client 110.

The client 110, the intermediate node 120, and the diagnosed node 130 in this embodiment of this application may include but are not limited to each electronic control unit (ECU), microcontroller Unit (MCU), vehicle control unit (VCU), zone control unit (ZCU), and the like on a vehicle. The client 110 may alternatively be an electronic device externally connected to the vehicle, such as a diagnostic apparatus or another tester. In addition, the intermediate node in this embodiment of this application may include one or more nodes.

FIG. 3 is a schematic flowchart of a vehicle diagnostic routing method according to an embodiment of this application. The vehicle diagnostic routing method may be applied to the intermediate node 120 in the vehicle diagnostic routing system 100 or a vehicle diagnostic routing apparatus 200 or an intermediate node 320 in a vehicle diagnostic routing system 300 or a vehicle 400 to be mentioned below. The vehicle diagnostic routing method may include the following steps S110 and S120.

Step S110: When a diagnostic request message sent by a client is received, forward the diagnostic request message.

The diagnostic request message in this embodiment of this application refers to a message sent by the client to a diagnosed node and used to instruct the diagnosed node to perform a corresponding diagnostic operation. The diagnostic request message may include diagnostic identifier (identity document, ID) information of the diagnosed node, and the diagnostic identifier information is used to uniquely identify each node.

In this embodiment of this application, an execution body (for example, an intermediate node) locally stores a subnet route identifier table, and the subnet route identifier table may include diagnostic identifier information of the node itself and diagnostic identifier information of all subordinate nodes of the node. The subordinate node refers to a node that a diagnostic request message needs to pass through or arrive after the diagnostic request message is routed and forwarded by a current node in a process of routing from a client to a diagnosed node, and the subordinate node may include the diagnosed node. For example, if subordinate nodes of the current node (a first node) include a second node, a third node, and the diagnosed node, a subnet route identifier table of the first node may include diagnostic identifier information of the first node, the second node, the third node, and the diagnosed node, a subnet route identifier table of the second node may include the diagnostic identifier information of the second node, the third node, and the diagnosed node, and a subnet route identifier table of the third node may include the diagnostic identifier information of the third node and the diagnosed node. The diagnosed node may be configured with or not configured with a subnet route identifier table according to an actual requirement.

When the diagnostic request message sent by the client is received, diagnostic identifier information of a next-level node may be searched in the subnet route identifier table according to the diagnostic identifier information of the diagnosed node. The diagnostic request message is forwarded to the next-level node according to the diagnostic identifier information of the next-level node. The next-level node may be the intermediate node, or may be the diagnosed node.

Step S120: If no diagnostic response from a next-level node is received within the first timing duration, send an upper-level node a message for requesting the client to wait, so as to notify the client to wait until a preset condition is met.

The diagnostic response from the next-level node in this embodiment of this application may be any response from the next-level node. For example, the response from the next-level node may be any diagnostic response from the diagnosed node, or the response from the next-level node may be a message sent by the next-level node and used for requesting the client to wait.

The message for requesting the client to wait in this embodiment of this application may include a target negative response code (NRC). The target NRC refers to a request correctly received-response pending (RCRRP) NRC in unified diagnostic services (UDS). The target NRC is used to represent that the diagnostic request message is correctly received, all parameters in the diagnostic request message are valid, but a requested diagnostic operation is not completed, and the diagnosed node temporarily is unable to receive another diagnostic request. Once a requested service has been completed, the diagnosed node should send a positive response or a negative response. A code of the positive response or the negative response should be different from the target NRC. A negative response of the target NRC may be repeated by the diagnosed node until the diagnostic operation requested by the client is completed and the diagnostic response message sent by the diagnosed node is sent. It should be noted that, according to an actual requirement, another specific message used to request the client to wait may alternatively be set but does not include the target NRC.

After the diagnostic request message is routed and forwarded, a timer (for example, a P2server timer) may be used for timing. If no diagnostic response from the next-level node is received within the first timing duration, a diagnostic response identifier (identity document, ID) of the diagnosed node may be used. For example, the diagnostic response identifier may be "0x785", and the message for requesting the client to wait is sent to the upper-level node at the preset period. By sending the message for requesting the client to wait by using the diagnostic response Id of the diagnosed node, a response for requesting the client to wait sent by the diagnosed node to the client may be simulated, so as to prolong response duration of the diagnosed node, thereby avoiding a diagnostic communication failure caused by a response timeout.

The first timing duration in this embodiment of this application may be duration defined by time parameters of a P2server timer. The time parameters of the P2server timer include a P2server_max time parameter and a P2*server_max time parameter. Generally, duration defined by the P2server_max time parameter is 50 milliseconds, and duration defined by the P2*server_max time parameter is 5000 milliseconds. By using the P2server_max time parameter and the P2*server_max time parameter, the client may know how long the diagnostic request message sent by the client will be responded. If no response from the diagnosed node is received after the time parameter of the P2server timer is exceeded, the client may report an error. For example, that the diagnosed node responds with "50 03 00 32 01 F4" after the client requests "10 03" means that the diagnosed node notifies the client that a response will be sent within the P2server_max time parameter. However, when the diagnosed node is busy in another event and does not have time to respond to the diagnostic request message of the client, the diagnosed node will send a response within the P2*server_max time parameter.

The preset period in this embodiment of this application refers to a sending time interval of the message for requesting the client to wait. The preset period may be set according to an actual requirement, for example, the preset period may be 2 seconds.

The preset condition in this embodiment of this application refers to a condition in which the message for requesting the client to wait does not need to be continued to be sent, and when the preset condition is met, the message for requesting the client to wait does not continue to be sent. In some implementations, if a diagnostic response from the diagnosed node is received, it is determined that the preset condition is met. In some implementations, if no diagnostic response from the diagnosed node is received after second timing duration is exceeded, it is determined that the preset condition is met. The second timing duration is greater than the first timing duration, and the second timing duration refers to a maximum timeout value, for example, the second timing duration is 60 seconds. The diagnostic response from the diagnosed node may refer to any response from the diagnosed node, and may include a positive response or a negative response.

According to the vehicle diagnostic routing method provided in this embodiment of this application, in a vehicle diagnostic routing process, a node between a client and a diagnosed node may automatically send a message for requesting the client to wait when no diagnostic response from a next-level node is received within the first timing duration, so as to notify the client to wait, thereby avoiding a diagnostic routing and response timeout, avoiding a diagnostic communication failure, and increasing a diagnostic communication success rate.

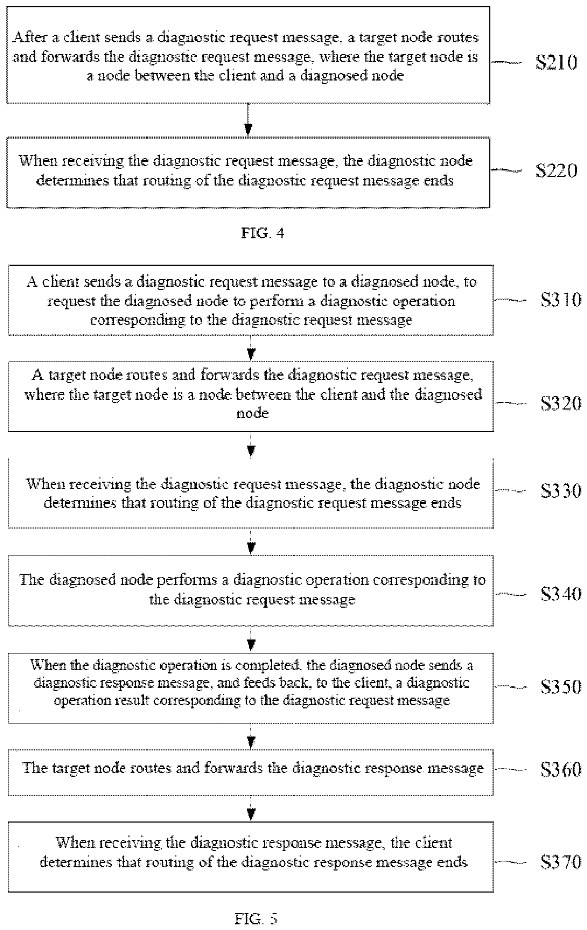

FIG. 4 is a schematic flowchart of a vehicle diagnostic routing method according to an embodiment of this application. The vehicle diagnostic routing method may be applied to the vehicle diagnostic routing system 100 or a vehicle diagnostic routing apparatus 200 or a vehicle diagnostic routing system 300 or a vehicle 400 to be mentioned below. The vehicle diagnostic routing method may include the following steps S210 and S220.

Step S210: After a client sends a diagnostic request message, an intermediate node routes and forwards the diagnostic request message, where the intermediate node is a node between the client and a diagnosed node.

The intermediate node routes and forwards the diagnostic request message according to the vehicle diagnostic routing method shown in FIG. 3. For a specific description, refer to step S110 and step S120. Details are not described herein again.

The intermediate node in this embodiment of this application may include one or more nodes. Each of the one or more nodes may include a subnet route identifier table. The subnet route identifier table of each node may include diagnostic identifier information of the node itself and diagnostic identifier information of all subordinate nodes. For a specific description of the subordinate node, refer to a related part in step S110.

In some implementations, to improve vehicle diagnostic routing efficiency, the same communication protocol may be used between two adjacent nodes in the client, the one or more nodes, and the diagnosed node.

In some implementations, different communication protocols may be used between two adjacent nodes in the client, the one or more nodes, and the diagnosed node, in order to take into account a function and a cost requirement of each node. In the prior art, in a case in which different communication protocols may be used between two adjacent nodes in the client, the one or more nodes, and the diagnosed node, because diagnostic routing further involves protocol conversion, diagnostic response time is relatively long, which easily causes a diagnostic response timeout, resulting in a diagnostic communication failure. However, the intermediate node in this application routes and forwards the diagnostic request message according to the method shown in FIG. 3. In a case in which no diagnostic response from a next-level node is received within a time period defined by the P2server time parameter, the intermediate node may automatically sends a message for requesting the client to wait, to notify the client to wait. Therefore, a diagnostic response timeout can be avoided, a diagnostic communication failure can be avoided, the foregoing defect in the prior art can be resolved, and a diagnostic communication success rate can be increased.

As an example, the intermediate node may include a first node, a second node, and a third node. The client may communicate with the first node by using a first communication protocol, for example, the first communication protocol is a diagnostic communication over Internet Protocol (DoIP) communication protocol. The first node may communicate with the second node by using a second communication protocol. For example, the second communication protocol is a diagnostic communication over controller area network with flexible data rate (DoCANFD) communication protocol. The second node may communicate with the third node by using a third communication protocol. For example, the third communication protocol is a diagnostic communication over controller area network (DoCAN) communication protocol. The third node may communicate with the diagnosed node by using a fourth communication protocol. For example, the fourth communication protocol is a diagnostic communication over local interconnect network (DoLIN) communication protocol.

In some implementations, levels of the one or more nodes are sequentially decreased in order of routing from the client to the diagnosed node. The diagnostic request message may be sequentially routed in order of the client, the one or more nodes in descending order of levels, and the diagnosed node. For example, the intermediate node may include a first node, a second node, and a third node whose levels are successively decreased. The diagnostic request message may be sequentially routed in order of the client, the first node, the second node, the third node, and the diagnosed node.

In some implementations, levels of the one or more nodes are sequentially increased in order of routing from the client to the diagnosed node. The diagnostic request message is sequentially routed in order of the client, the one or more nodes in ascending order of levels, and the diagnosed node. For example, the intermediate node may include a first node, a second node, and a third node whose levels are successively increased. The diagnostic request message may be sequentially routed in order of the client, the first node, the second node, the third node, and the diagnosed node.

By setting levels of multiple nodes in the intermediate node, it may be convenient to separately set diagnostic identifier information of a node included in a subnet route identifier table of each node. It is unnecessary to set the subnet route identifier table of each node to include diagnostic identifier information of all nodes, so that a system resource can be saved, and a next-level node can be quickly searched in the subnet route identifier table, thereby improving overall diagnostic routing efficiency.

Step S220: When receiving the diagnostic request message, the diagnostic node determines that routing of the diagnostic request message ends.

That routing of the diagnostic request message ends in this embodiment of this application means that the diagnostic request message is successfully routed to the diagnosed node.

When receiving the diagnostic request message, the diagnosed node determines that routing of the diagnostic request message ends. At the same time, or later, the diagnosed node may determine, according to a current status of the diagnosed node, whether to immediately respond to the diagnostic request message.

If the current status of the diagnosed node is idle, a first response may be sent to the client to notify the client that the diagnostic request message will be immediately responded, that is, will be responded within the duration defined by the P2server_max time parameter (50 milliseconds). The current status being idle may include that a current load quantity of the diagnosed node is less than or equal to a preset load quantity, a remaining memory quantity is greater than or equal to a preset remaining quantity, a service that is being executed is about to be completed, a service requested by the diagnostic request message has a higher level than another remaining service, and the like.

If the current status of the diagnosed node is busy, a second response may be sent to the client. The second response is used to notify the client that no response will be made currently in a timely manner, and the diagnostic request message will not be immediately responded, that is, a response will be made within the duration defined by the P2*server_max time parameter (5000 milliseconds). Alternatively, no response may be sent to the client, and response time is prolonged by sending, to the client by using the intermediate node, the message for requesting the client to wait. The current status being busy may include that a current load quantity of the diagnosed node is greater than a preset load quantity, a remaining memory quantity is less than a preset remaining quantity, a service that is being processed needs to be completed in a relatively long time, after the service that is being processed, multiple tasks whose levels are higher than a level of the service requested by the diagnostic request message exist, and the like.

According to the vehicle diagnostic routing method provided in this embodiment of this application, in a vehicle diagnostic routing process, an intermediate node may automatically send a message for requesting the client to wait when no diagnostic response from a next-level node is received within the first timing duration, so as to notify the client to wait, thereby avoiding a diagnostic routing and response timeout, avoiding a diagnostic communication failure, and increasing a diagnostic communication success rate.

For a problem that multi-level complex network vehicle diagnostic routing is prone to a diagnostic response timeout, most of conventional technologies use a method in which a P2client parameter value (the expected duration) is increased, and validity of the P2client parameter value is verified by using a large quantity of vehicle diagnostic routing pressure tests. This method has the following three defects:
Defect 1: It is difficult to determine a proper P2client parameter value. A large quantity of vehicle diagnostic routing pressure tests for verification are required. The verification period is long.
Defect 2: For any change involving a diagnostic link, for example, a change of a diagnostic link layer, a change of a diagnostic protocol used by each node, and adjustment of a location of each node, the P2client parameter value needs to be re-adjusted, and flexibility and expansibility are poor.
Defect 3: In a case in which a vehicle uses nodes provided by different suppliers, protocol conversion and diagnostic routing capabilities of the nodes are different. In development of each vehicle, the P2client parameter value needs to be re-adjusted and verified.

Compared with the solution proposed in the prior art to increase the P2client parameter value to avoid a diagnostic response timeout for multi-level complex network vehicle diagnostic routing, the vehicle diagnostic routing method provided in this embodiment of this application may automatically trigger the client to wait by using the foregoing solution, so that a change of a conversion protocol between a diagnostic link and each node can be adapted, a routing difference between nodes provided by different suppliers can be adapted, and a large quantity of vehicle diagnostic routing pressure tests for verification are not required, thereby resolving the foregoing three problems in the prior art.

FIG. 5 is a schematic flowchart of a vehicle diagnostic routing method according to an embodiment of this application. The vehicle diagnostic routing method may be applied to the vehicle diagnostic routing system 100 or a vehicle diagnostic routing apparatus 200 or a vehicle diagnostic routing system 300 or a vehicle 400 to be mentioned below. The vehicle diagnostic routing method may include step S310 to step S370.

Step S310: A client sends a diagnostic request message to a diagnosed node, to request the diagnosed node to perform a diagnostic operation corresponding to the diagnostic request message.

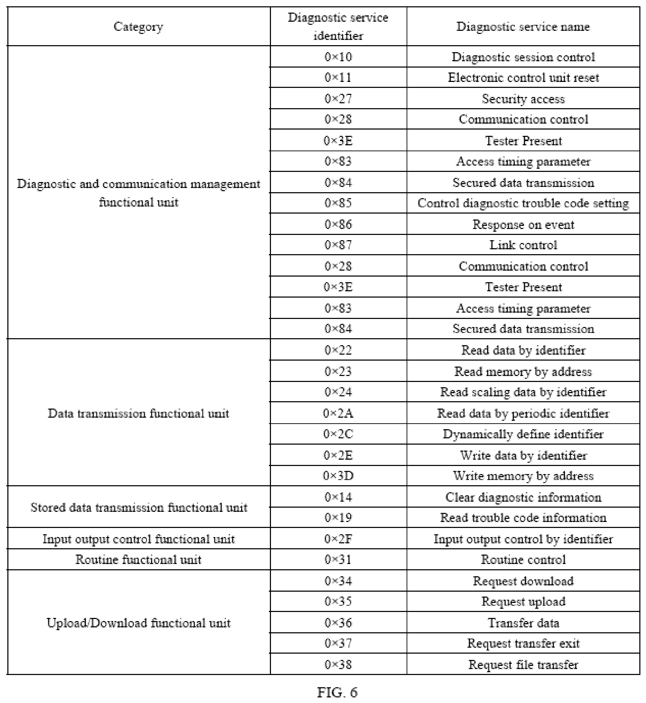

As shown in FIG. 6, diagnostic services of UDS include 6 categories with 26 types, and each diagnostic service has an independent diagnostic service identifier (SID). The diagnostic request message may include a diagnostic service identifier, and there is a correspondence between the diagnostic service identifier and the diagnostic operation. For other specific descriptions about the diagnostic request message, refer to the foregoing related part.

The client may write the diagnostic service identifier corresponding to the diagnostic operation to be requested to be performed by the diagnosed node and diagnostic identifier information of the diagnosed node into the diagnostic request message, and send the diagnostic request message.

Step S320: An intermediate node routes and forwards the diagnostic request message, where the intermediate node is a node between the client and the diagnosed node. The intermediate node may route and forward the diagnostic request message by using the method shown in FIG. 3. For a specific description of step S320, refer to step S110, step S120, and step S210.

Step S330: When receiving the diagnostic request message, the diagnostic node determines that routing of the diagnostic request message ends. For a specific description of step S330, refer to step S220.

Step S340: The diagnosed node performs a diagnostic operation corresponding to the diagnostic request message.

After receiving the diagnostic request message, the diagnosed node parses the diagnostic request message to obtain the diagnostic service identifier corresponding to the diagnostic request message, and performs the diagnostic operation corresponding to the diagnostic service identifier.

Step S350: When the diagnostic operation is completed, the diagnosed node sends a diagnostic response message, and feeds back, to the client, a diagnostic operation result corresponding to the diagnostic request message.

After performing the diagnostic operation, the diagnosed node generates a diagnostic result. The diagnostic response message includes the diagnostic result of the diagnostic operation and diagnostic identifier information of the client. The diagnosed node may write the diagnostic identifier information of the client and the diagnostic result of the diagnostic operation into the diagnostic response message, and send the diagnostic response message.

Step S360: The intermediate node routes and forwards the diagnostic response message.

As mentioned above, the intermediate node includes one or more nodes. In some implementations, levels of the one or more nodes are sequentially decreased in order of routing from the client to the diagnosed node. The diagnostic response message is sequentially routed in order of the diagnosed node, the one or more nodes in ascending order of levels, and the client. In some implementations, levels of the one or more nodes are sequentially increased in order of routing from the client to the diagnosed node. The diagnostic response message is sequentially routed in order of the diagnosed node, the one or more nodes in descending order of levels, and the client.

Step S370: When receiving the diagnostic response message, the client determines that routing of the diagnostic response message ends.

That routing of the diagnostic response message ends in this embodiment of this application means that the diagnostic response message is successfully routed to the client. After receiving the diagnostic response message, the client may further obtain the diagnostic result of the diagnostic operation from the diagnostic response message, and perform a subsequent operation according to the diagnostic result. For example, a new diagnostic request message continues to be sent to the diagnosed node, or another diagnostic request message is sent to another diagnosed node.

According to the vehicle diagnostic routing method provided in this embodiment of this application, in a vehicle diagnostic routing process, a node between a client and a diagnosed node may automatically send a message for requesting the client to wait when no diagnostic response from a next-level node is received within the first timing duration, so as to notify the client to wait, thereby avoiding a diagnostic routing and response timeout, avoiding a diagnostic communication failure, and increasing a diagnostic communication success rate. Compared with the solution proposed in the prior art to increase the P2client parameter value to avoid a diagnostic response timeout for multi-level complex network vehicle diagnostic routing, the vehicle diagnostic routing method provided in this embodiment of this application may automatically trigger the client to wait by using the foregoing solution, so that a change of a conversion protocol between a diagnostic link and each node can be adapted, a routing difference between nodes provided by different suppliers can be adapted, and a large quantity of vehicle diagnostic routing pressure tests for verification are not required, thereby resolving the foregoing three problems in the prior art.

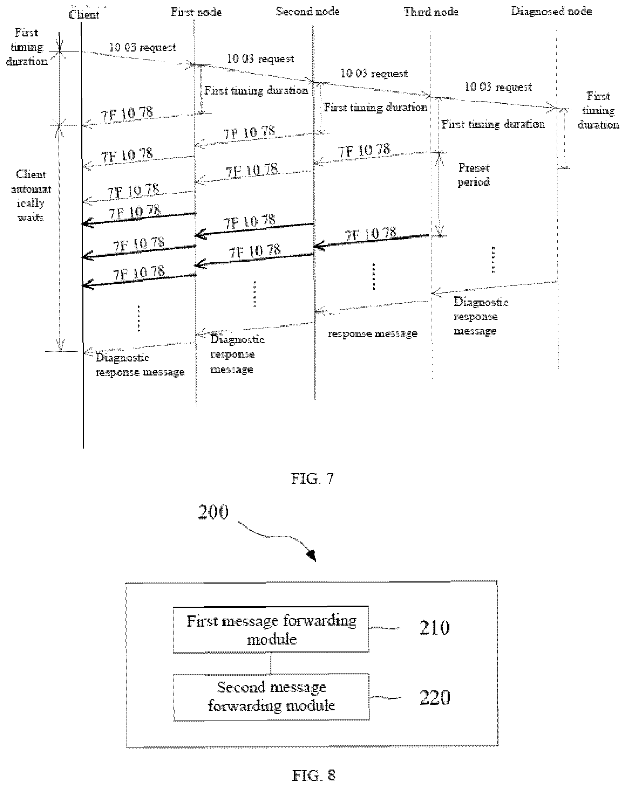

For ease of understanding, an example embodiment shown in FIG. 7 is provided herein to describe the vehicle diagnostic routing method provided in the embodiment of this application. As shown in FIG. 7, a client sends a "10 03" request to a diagnosed node, and the "10 03" request arrives at the diagnosed node after sequentially passing through a first node, a second node, and a third node. After receiving the "10 03" request, the diagnosed node performs a diagnostic operation corresponding to the "10 03" request.

In a routing process of the "10 03" request, after forwarding the "10 03" request, the first node performs timing by using a timer. If no diagnostic response from the second node is received within the first timing duration, a "7F 10 78" message is sent to the client at a preset period (for example, 2 seconds), to request the client to wait. In this case, the timer performs timing again.

After forwarding the "10 03" request, the second node performs timing by using a timer. If the second node receives no diagnostic response from the third node within the first timing duration, the second node sends a "7F 10 78" message to the first node at a preset period (for example, 2 seconds). In this case, the timer performs timing again. When receiving the "7F 10 78" message sent by the second node, the first node forwards the "7F 10 78" message to the client, to request the client to wait.

After forwarding the "10 03" request, the third node performs timing by using a timer. If the third node does not receive a diagnostic response from the diagnosed node within the first timing duration, the third node sends a "7F 10 78" message to the second node at a preset period (for example, 2 seconds). In this case, the timer performs timing again. When receiving the "7F 10 78" message sent by the third node, the second node forwards the "7F 10 78" message to the first node, and when receiving the "7F 10 78" message sent by the second node, the first node forwards the "7F 10 78" message to the client to request the client to wait.

Bold arrows shown in FIG. 7 respectively indicate that after the first node, the second node, and the third node send the "7F 10 78" message for the first time, when no diagnostic response from the second node is received in the preset period, the first node, the second node, and the third node send the "7F 10 78" message for the second time.

After completing the diagnostic operation, the diagnosed node sends a diagnostic response message to the client, where the diagnostic response message successively passes through the third node, the second node, and the first node to finally reach the client, and vehicle diagnostic routing ends this time.

It can be learned that in the vehicle diagnostic routing method provided in this embodiment of this application, each intermediate node uses a manner of automatically triggering a client to wait, so as to prolong diagnostic response time, thereby effectively avoiding a diagnostic response timeout, and resolving a problem that diagnostic communication fails easily due to the diagnostic response timeout.

FIG. 8 is a schematic structural diagram of a vehicle diagnostic routing apparatus according to an embodiment of this application. A vehicle diagnostic routing apparatus 200 may be applied to an intermediate node in the vehicle diagnostic routing system 100 or an intermediate node of a vehicle diagnostic routing system 300 or a vehicle 400 to be mentioned later. The vehicle diagnostic routing apparatus 200 may include a first message forwarding module 210 and a second message forwarding module 220.

The first message forwarding module 210 is configured to: when a diagnostic request message sent by a client is received, forward the diagnostic request message; and
the second message forwarding module 220 is configured to: if no diagnostic response from a next-level node is received within the first timing duration, send an upper-level node a message for requesting the client to wait, so as to notify the client to wait until a preset condition is met.

In some implementations, the second message forwarding module 220 is further configured to send, at a preset period by using a diagnostic response identifier of a diagnosed node, the upper-level node the message for requesting the client to wait.

In some implementations, the message for requesting the client to wait includes a target negative response code, the target negative response code represents that the diagnostic request message is correctly received, all parameters in the diagnostic request message are valid, but a requested diagnostic operation is not completed, and the diagnosed node temporarily is unable to receive another diagnostic request.

In some implementations, the second message forwarding module 220 is further configured to: if a diagnostic response from a diagnosed node is received, determine that the preset condition is met.

In some implementations, the second message forwarding module 220 is further configured to: if no diagnostic response from the diagnosed node is received after second timing duration is exceeded, determine that the preset condition is met, where the second timing duration is longer than the first timing duration.

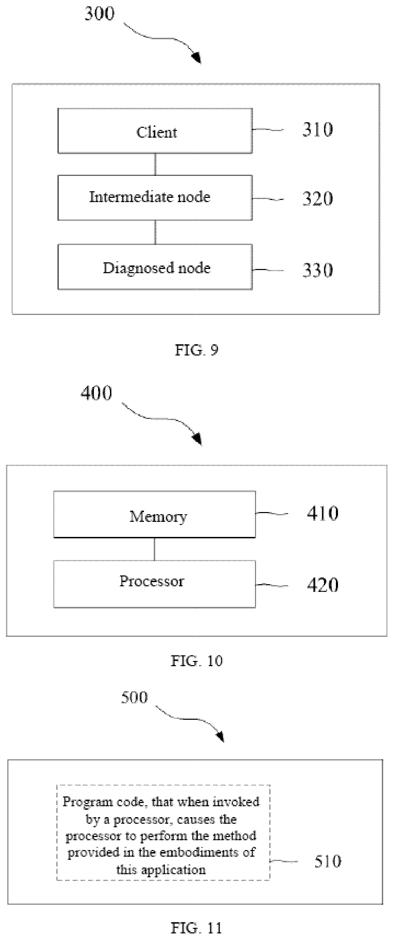

FIG. 9 is a schematic structural diagram of a vehicle diagnostic routing system according to an embodiment of this application. A vehicle diagnostic routing system 300 may be applied to a vehicle 400 to be mentioned later. The vehicle diagnostic routing system 300 may include a client 310, an intermediate node 320, and a diagnosed node 330.

The client 310 is configured to send a diagnostic request message;
the intermediate node 320 is configured to route and forward the diagnostic request message according to the vehicle diagnostic routing method shown in FIG. 3, where the intermediate node 320 is a node between the client 310 and the diagnosed node 330; and
the diagnosed node 330 is configured to: when receiving the diagnostic request message, determine that routing of the diagnostic request message ends.

It should be noted that the vehicle diagnostic routing system 300 may be the same as the foregoing vehicle diagnostic routing system 100, the client 310 may be the same as the client 110, the intermediate node 320 may be the same as the foregoing intermediate node 120, and the diagnosed node 330 may be the same as the diagnosed node 130.

In some implementations, the intermediate node 320 includes one or more nodes.

In some implementations, each of the one or more nodes includes a subnet routing identifier table, and the subnet routing identifier table of each node includes diagnostic identifier information of the node itself and diagnostic identifier information of all subordinate nodes.

In some implementations, the same communication protocol is used between two adjacent nodes in the client 310, the one or more nodes, and the diagnosed node 330.

In some implementations, different communication protocols are used between two adjacent nodes in the client 310, the one or more nodes, and the diagnosed node 330.

In some implementations, levels of the one or more nodes are sequentially decreased in order of routing from the client 310 to the diagnosed node 330. The diagnostic request message is sequentially routed in order of the client 310, the one or more nodes in descending order of levels, and the diagnosed node 330. The diagnosed node 330 is further configured to perform a diagnostic operation corresponding to the diagnostic request message, and send a diagnostic response message when the diagnostic operation is completed. The diagnostic response message is sequentially routed in order of the diagnosed node 330, the one or more nodes in ascending order of levels, and the client 310. When receiving the diagnostic response message, the client 310 is further configured to determine that routing of the diagnostic response message ends.

In some implementations, levels of the one or more nodes are sequentially increased in order of routing from the client to the diagnosed node. The diagnostic request message is sequentially routed in order of the client 310, the one or more nodes in ascending order of levels, and the diagnosed node 330. The diagnosed node 330 is further configured to perform a diagnostic operation corresponding to the diagnostic request message, and send a diagnostic response message when the diagnostic operation is completed. The diagnostic response message is sequentially routed in order of the diagnosed node 330, the one or more nodes in descending order of levels, and the client 310. When receiving the diagnostic response message, the client 310 is further configured to determine that routing of the diagnostic response message ends.

It may be clearly understood by a person skilled in the art that the vehicle diagnostic routing apparatus 200 provided in this embodiment of this application may implement the vehicle diagnostic routing method shown in FIG. 3. The vehicle diagnostic routing system 300 provided in this embodiment of this application may implement the vehicle diagnostic routing method provided in the embodiment of this application. For a specific working process of the foregoing apparatus and module, refer to a process corresponding to a corresponding vehicle diagnostic routing method. Details are not described herein again.

In the embodiments provided in this application, coupling, direct coupling, or communicative connection between the displayed or discussed modules may be indirect coupling or communicative coupling by using some interfaces, apparatuses, or modules, and may be in an electrical, mechanical, or another form. This is not limited in the embodiments of this application.

In addition, function modules in the embodiments of this application may be integrated into one processing module, or each of the modules may exist alone physically, or two or more modules are integrated into one module. The integrated module may be implemented in a form of hardware, or may be implemented in a form of a software function module. This is not limited in the embodiments of this application.

FIG. 10 is a schematic structural diagram of a vehicle according to an embodiment of this application. The vehicle 400 may include one or more of the following components: a memory 410, one or more processors 420, and one or more application programs. The one or more application programs may be stored in the memory 410 and configured to: when invoked by the one or more processors 420, cause the one or more processors 420 to perform the vehicle diagnostic routing method provided in the embodiment of this application.

The processor 420 may include one or more processing cores. The processor 420 is connected to various parts of the vehicle 400 by using various interfaces and lines, and is configured to run or execute instructions, a program, a code set, or an instruction set stored in the memory 410, and invoke and run or execute data stored in the memory 410 to execute various functions of the vehicle 400 and process data.

The processor 420 may be implemented in at least one hardware form of a digital signal processor (DSP), a field-programmable gate array (FPGA), or a programmable logic array (PLA).

The processor 420 may be integrated with one or a combination of a central processing unit (CPU), a graphics processing unit (GPU), and a modem. The CPU mainly processes an operating system, a user interface, an application program, and the like. The GPU is configured to render and draw display content. The modem is configured to process wireless communication. It may be understood that the modem may not be integrated into the processor 420, and is separately implemented by using a communication chip.

The memory 410 may include a random access memory (RAM), or may include a read-only memory (ROM). The memory 410 may be configured to store instructions, a program, a code, a code set, or an instruction set. The memory 410 may include a program storage area and a data storage area. The program storage area may store an instruction used to implement an operating system, an instruction used to implement at least one function, an instruction used to implement the foregoing method embodiments, and the like. The data storage area may store data created by the vehicle 400 in use, and the like.

FIG. 11 is a schematic structural diagram of a computer-readable storage medium according to an embodiment of this application. The computer-readable storage medium 500 stores program code 510, and the program code 510 is configured to: when invoked by a processor, cause the processor to perform the foregoing vehicle diagnostic routing method provided in the embodiment of this application.

The computer-readable storage medium 500 may be an electronic memory such as a flash memory, an electrically-erasable programmable read-only memory (EEPROM), an erasable programmable read-only memory (EPROM), a hard disk, or a ROM.

In some implementations, the computer-readable storage medium 500 includes a non-transitory computer-readable storage medium (Non-TCRSM). The computer-readable storage medium 500 has storage space for the program code 510 that performs any of the method steps in the foregoing method. The program code 510 may be read from or written into one or more computer program products. The program code 510 may be compressed in an appropriate form.

In conclusion, the embodiments of this application provide a vehicle diagnostic routing method, apparatus, and system, a vehicle, and a storage medium, and relate to the field of diagnostic communication technologies. In the method, when receiving a diagnostic request message sent by a client, a node between the client and a diagnosed node forwards the diagnostic request message; and if no diagnostic response from a next-level node is received within the first timing duration, sends an upper-level node a message for requesting the client to wait, so as to notify the client to wait until a preset condition is met. Therefore, a diagnostic routing and response timeout can be avoided, a diagnostic communication failure can be avoided, and a diagnostic communication success rate can be increased.

Finally, it should be noted that the foregoing embodiments are merely used to describe the technical solutions of this application, but do not constitute limitations thereon. Although this application is described in detail with reference to the foregoing embodiments, a person skilled in the art should understand that the technical solutions described in the foregoing embodiments may still be modified, or some technical features thereof may be equally substituted. These modifications or substitutions do not make the essence of the corresponding technical solutions depart from the spirit and scope of the technical solutions in the embodiments of this application.

## Claims

1. A vehicle diagnostic routing method, comprising:
when a diagnostic request message sent by a client (110) is received, forwarding the diagnostic request message; and
if no diagnostic response from a next-level node is received within the first timing duration, sending an upper-level node a message for requesting the client (110) to wait, so as to notify the client (110) to wait until a preset condition is met.

2. The method according to claim 1, wherein the sending an upper-level node a message for requesting the client (110) to wait comprises:
sending, at a preset period by using a diagnostic response identifier of a diagnosed node (130), the upper-level node the message for requesting the client (110) to wait.

3. The method according to claim 2, wherein the message for requesting the client (110) to wait comprises a target negative response code, the target negative response code represents that the diagnostic request message is correctly received, all parameters in the diagnostic request message are valid, but a requested diagnostic operation is not completed, and the diagnosed node (130) temporarily is unable to receive another diagnostic request.

4. The method according to claim 1, wherein after the forwarding the diagnostic request message, the method further comprises:
if a diagnostic response from a diagnosed node (130) is received, determining that the preset condition is met.

5. The method according to claim 1 or 4, wherein after the forwarding the diagnostic request message, the method further comprises:
if no diagnostic response from the diagnosed node (130) is received after second timing duration is exceeded, determining that the preset condition is met, wherein the second timing duration is longer than the first timing duration.

6. A vehicle diagnostic routing method, comprising:
after a client (110) sends a diagnostic request message, routing and forwarding, by an intermediate node (120), the diagnostic request message according to the method in any one of claims 1 to 5, wherein the intermediate node (120) is a node between the client (110) and a diagnosed node (130); and
when receiving the diagnostic request message, determining, by the diagnosed node (130), that routing of the diagnostic request message ends.

7. The method according to claim 6, wherein the intermediate node (120) comprises one or more nodes.

8. The method according to claim 7, wherein levels of the one or more nodes are sequentially decreased in order of routing from the client (110) to the diagnosed node (130).

9. The method according to claim 8, wherein each of the one or more nodes comprises a subnet routing identifier table, and the subnet routing identifier table of each node comprises diagnostic identifier information of the node itself and diagnostic identifier information of all subordinate nodes.

10. The method according to claim 7, wherein different communication protocols are used between two adjacent nodes in the client (110), the one or more nodes, and the diagnosed node (130).

11. The method according to any one of claims 8 to 10, wherein the diagnostic request message is routed sequentially in order of the client (110), the one or more nodes in descending order of levels, and the diagnosed node (130).

12. The method according to claim 11, wherein after the determining, by the diagnosed node (130), that routing of the diagnostic request message ends, the method further comprises:
sending, by the diagnosed node (130), a diagnostic response message;
sequentially routing the diagnostic response message in order of the diagnosed node (130), the one or more nodes in ascending order of levels, and the client (110); and
when receiving the diagnostic response message, determining, by the client (110), that routing of the diagnostic response message ends.

13. A vehicle diagnostic routing apparatus (200), comprising:
a first message forwarding module (210), configured to: when a diagnostic request message sent by a client (110) is received, forward the diagnostic request message; and
a second message forwarding module (220), configured to: if no diagnostic response from a next-level node is received within the first timing duration, send an upper-level node a message for requesting the client (110) to wait, so as to notify the client (110) to wait until a preset condition is met.

14. A vehicle diagnostic routing system (100), comprising:
a client (110), configured to send a diagnostic request message;
an intermediate node (120), configured to route and forward the diagnostic request message according to the method in any one of claims 1 to 5, wherein the intermediate node (120) is a node between the client (110) and a diagnosed node (130); and
the diagnosed node (130), configured to: when receiving the diagnostic request message, determine that routing of the diagnostic request message ends.

15. A vehicle (400), comprising:
a memory (410);
one or more processors (420); and
one or more application programs, wherein the one or more application programs are stored in the memory (410) and configured to: when invoked by the one or more processors (420), cause the one or more processors (420) to perform the method according to any one of claims 1 to 12.

16. A computer-readable storage medium (500), wherein the computer-readable storage medium (500) stores program code (510), configured to: when invoked by a processor (420), cause the processor (420) to perform the method according to any one of claims 1 to 12.
